# EUROPÄISCHE PATENTSCHRIFT

(11) **EP 1 149 003 B1**
(45) Veröffentlichungstag und Bekanntmachung des Hinweises auf die Patenterteilung: **06.11.2002**
(21) Anmeldenummer: 00909090.3
(22) Anmeldetag: 20.01.2000
(51) Int. Cl.: B60R 16/02, H04N 7/18

(54) **LOKALES NETZWERK IN EINEM FAHRZEUG**
LOCAL NETWORK IN A VEHICLE
RESEAU LOCAL DANS UN VEHICULE

(30) Priorität: 28.01.1999 DE 19903266
(43) Veröffentlichungstag der Anmeldung: 31.10.2001
(73) Patentinhaber: XSYS Interactive Research GmbH, 78050 Villingen-Schwenningen (DE)
(72) Erfinder: TEICHNER, Detlef, D-78126 Königsfeld (DE)
(74) Vertreter: Westphal, Klaus, Dipl.-Ing.
(86) Internationale Anmeldenummer: EP0000419
(87) Internationale Veröffentlichungsnummer: WO00044590

(56) Entgegenhaltungen:
- EP-A- 0 277 014
- WO-A-94/28679
- DE-A- 19 503 213

## Beschreibung

Die Erfindung betrifft ein lokales Netzwerk in einem Fahrzeug mit mehreren über das Fahrzeug verteilten Teilnehmern, die miteinander mittels einer Datenleitung zur Übertragung von Audio- und Videodaten sowie von Steuerdaten zu einem ringförmigen Netzwerk verbunden sind.

Ein derartiges lokales Netzwerk für ein Fahrzeug ist aus der Deutschen Patentschrift DE 195 03 2l3 A1 bekannt. Dieses lokale Netzwerk zeigt mehrere Teilnehmer, von denen ein Teil Audiodaten, Videodaten und Steuerdaten generieren und diese in das ringförmige Netzwerk einspeisen. Diese Teilnehmer werden als Datenquellen bezeichnet. Ein anderer Teil der Teilnehmer des Netzwerks entnimmt aus dem Netzwerk die für sie bestimmten Daten und bringt sie zur Darstellung, was eine akustische Wiedergabe oder eine optische Wiedergabe sein kann. Bei diesen Teilnehmern spricht man von sogenannten Datensenken. Bei dem beschriebenen lokalen Netzwerk sind verschiedene Datenquellen wie beispielsweise Autoradio, CD-Player, Videorecorder oder auch TV-Tuner vorgesehen, welche ihre Daten unkomprimiert über eine optische Datenleitung an entsprechende Datensenken leiten, was beipielsweise ein Audioverstärker sein kann, an den mehrere Lautsprecher angeschlossen sind, oder ein Bildschirm sein kann, der das nichtkomprimierte BAS-Videosignal zur Darstellung bringt. Am Beispiel eines TV-Tuners als Datenquelle werden die Videodaten in der beschriebenen Weise als nichtkomprimiertes FBAS-Videosignal zu einem Bildschirm übertragen und parallel hierzu die Audiodaten als nichtkomprimierte Audiodaten über das Netzwerk zu einem Audioverstärker übertragen und als akustisches Signal wiedergegeben. Dabei erfolgt die Übertragung der Daten in einem Format, welches eine getaktete Folge von einzelnen Bit-Gruppen gleicher Länge vorschreibt, in denen für die Audio- bzw. Videodaten, das sind echtzeitrelevante Quelldaten, die einer Unterbrechung des Datenflusses nicht zugänglich sind, und für die Steuerdaten jeweils bestimmte Bitpositionen zur Übertragung von der Datenquelle zur Datensenke vorgesehen sind. Dabei sind die Bitpositionen für die Quelldaten in mehrere zusammenhängende Teilbitgruppen zusammengefasst, mittels derer die spezifischen Audio- bzw. Videodaten einer Datenquelle zu einer zugeordneten Datensenke parallel übertragen werden. Diese Übertragung wird mittels parallel übertragener Steuerdaten organisiert. Ein derartiges Netzwerk kann nur wenige Teilnehmer aufnehmen, welche unabhängig voneinander und damit teilweise gleichzeitig ihre Daten in das Netzwerk geben bzw. aus diesem entnehmen können, da die Übertragungskapazität des Netzwerkes über die Datenleitung begrenzt ist.

Der Erfindung liegt die Aufgabe zugrunde, ein lokales Netzwerk zu schaffen, welches einerseits die maximale Übertragungskapazität im Hinblick auf eine gegebenenfalls erhöhte Teilnehmeranzahl besser ausnutzt, wobei die Qualität der Darstellung der Daten in den Datensenken möglichst erhalten ist.

Diese Aufgabe wird erfindungsgemäß durch ein lokales Netzwerk mit den Merkmalen des Anspruch 1 gelöst.

Vorteilhafte Weiterbildungen ergeben sich aus den Unteransprüchen.

Das erfindungsgemäße lokale Netzwerk zeigt eine Datenquelle für komprimierte Audio- und Videodaten, welche mit einem Demultiplexer zur Trennung der in einem komprimierten Signal enthaltenen komprimierten Audio- und komprimierten Videodaten versehen ist. Diese komprimierten Audio- und Videodaten werden getrennt voneinander verarbeitet. Dabei werden die komprimierten Audiodaten einem Bitstreamdecoder zur Decodierung zugeführt, der die Audiodaten in ein nicht komprimiertes Format insbesondere in ein PCM-Format überführt. Dem Bitstreamdecoder ist ein Audiobuffer zur Zwischenspeicherung der getrennten Audiodaten zugeordnet, dessen Zwischenspeicherzeit durch entsprechende Steuerbefehle veränderlich gewählt werden kann. Die durch den Demultiplexer abgetrennten, komprimierten Videodaten werden einem Bitratenumsetzer, der eine Datenreduktion der Videodaten vornimmt, einer Umcodierung zugeführt. Der Umfang der Reduktion der Daten richtet sich dabei insbesondere nach der Auflösung und der Größe des Displays in der Datensenke. Hierdurch wird es möglich, dass der Umfang der übertragenen komprimierten Videodaten deutlich reduziert wird. Da eine Anpassung des Umfanges der Reduktion nach den Erfordernissen in der Datensenke erfolgt, wird hierdurch die Darstellungsqualität der Videodaten nicht beeinflusst. Diesem Bitratenumsetzer ist ein Videobuffer zugeordnet, dessen Zwischenspeicherzeit mittels eines Steuerbefehls einstellbar ist.

Die zwischengespeicherten, decodierten Audiodaten und die zwischengespeicherten, umcodierten Videodaten werden einem Businterface zugeführt, das die Daten in die für die Übertragung zur Datensenke vorgesehenen Teilbitgruppen einbringt und dadurch die zugeführte, parallele Übertragung über die Datenleitung zur jeweiligen Datensenke ermöglicht. Dabei wird die Zwischenspeicherzeit der Buffer durch eine Steuereinheit in der Datenquelle so gesteuert, dass Zeitunterschiede bei der Darstellung der miteinander korrelierten Audiodaten und Videodaten beispielsweise aufgrund einer unterschiedlich langen Bearbeitung in dem Bitstreamdecoder bzw. im Bitratenumsetzer zumindest reduziert vorzugsweise vollständig ausgeglichen werden. Damit kann sichergestellt werden, dass zu einem dargestellten Bild auch zum richtigen Zeitpunkt der korrekte Ton übertragen und dargestellt wird. Damit wird es nun möglich, die Qualität der übertragenen Daten der Datenquelle für Audio- und Videodaten aufeinander abgestimmt zu verbessern.

Dabei wird zusätzlich durch die spezifische Ausbildung der Übertragung der datenreduzierten, komprimierten Videodaten und der nicht komprimierten Audiodaten über die Datenleitung erreicht, dass ein vorteilhafter Kompromiss zwischen den Anforderungen an Kostengünstigkeit des lokalen Netzwerkes und optimierter Übertragungskapazität gegeben ist. Gemäß der Erfindung werden die Audiodaten in einer nichtkomprimierten Form übertragen, wodurch eine kostengünstige Ausbildung einer Datensenke für die Audiodaten gegeben ist, während im Hinblick auf die trotz der Datenreduktion sehr umfangreichen Videodatenmengen eine komprimierte Übertragung gewählt ist und damit eine Realisierung der Datensenke für Videodaten mit einem dementsprechend aufwendigen Decoderbaustein erforderlich ist, was aber im Hinblick auf die verbesserte Ausnutzung der Datenübertragungskapazität durch die Übertragung des komprimierten reduzierten Videosignals ausgeglichen wird.

Es gibt Datenquellen, die neben den komprimierten Audiodaten und Videodaten auch andere weitere komprimierte Daten empfangen oder von einem Datenträger entnehmen, wie zum Beispiel ein DVD-Player. Ein solcher DVD-Player (Digital Versatile Disc-Player) kann mit seinem Abspieler die auf einer DVD-Platte gespeicherten komprimierten Signale lesen und mittels eines Demultiplexers in die Bestandteile komprimierte Audiodaten, komprimierte Videodaten und komprimierte weitere Daten aufteilen und einer spezifischen getrennten weiteren Bearbeitung zuführen. In der beschriebenen Weise werden die komprimierten Audiodaten, die komprimierten Videodaten zwischengespeichert und umcodiert bzw. decodiert, während die weiteren komprimierten Daten einem zweiten Bitratenumsetzer zur Umcodierung zugeführt werden und darüberhinaus diese Daten in dem Datenpfad einem Datenbuffer zur Zwischenspeicherung der getrennten Daten zugeführt werden. Nach der getrennten Bearbeitung der verschiedenen Datenarten werden alle einem Businterface zugeführt, das die verschiedenen Daten in entsprechende getrennte Teilbitgruppen zur Übertragung über die Datenleitung zu der jeweiligen Datensenke einbringt. Der Datenbuffer wird entsprechend dem Audiobuffer und dem Videobuffer durch die Steuereinheit gesteuert und dadurch die veränderliche Zwischenspeicherzeit festgelegt. Durch eine angepasste Festlegung der Zwischenspeicherzeit der jeweiligen Buffer wird erreicht, dass die auf dem Weg von der Antenne bzw. vom Speichermedium oder einer Zuführleitung der Datenquelle erhaltenen komprimierten Audio-, Video- und sonstige Daten zur Darstellung dieser Daten entstandenen Zeitunterschiede zumindest teilweise ausgeglichen wird. Typische Beispiele für komprimierte weitere Daten sind Informationen zu den sogenannten Subpictures, wie sie von der DVD bekannt sind. Durch diese dreifache Aufgliederung der komprimierten Signale ist sichergestellt, dass alle verschiedenen Daten spezifisch beispielsweise nach ihrer jeweiligen Bearbeitungszeit so unterschiedlich in ihrem zeitlichen Verlauf verzögert werden, dass eine möglichst zeitgleiche Darstellung der Audiodaten, der Videodaten und der weiteren Daten beispielsweise als Subpicture in den einzelnen Datensenken gegeben ist.

Es hat sich als vorteilhaft erwiesen, Buffer unmittelbar vor dem Interface, also nach dem Bitratenumsetzer bzw. dem Decoder anzuordnen. Damit ist sichergestellt, alle vor der Zwischenspeicherung generierten Zeitunterschiede, insbesondere die in dem Decoder und den Bitratenumsetzern gebildeten Zeitunterschiede, vor der Einbringung der Daten in die Teilbitgruppen durch das Businterface wenigstens teilweise auszugleichen. Die Steuerung ist in der Art einer Vorwärtssteuerung ausgebildet, wodurch eine sehr einfache, sichere und kostengünstige Steuerstruktur gegeben ist.

Daneben ist es auch möglich, den oder die Buffer unmittelbar hinter dem Demultiplexer und vor dem jeweils zugeordneten Bitstreamdecoder bzw. Bitratenumsetzer anzuordnen. Damit ist sichergestellt, dass bereits beim weiteren Bearbeiten der komprimierten Daten in dem Bitratenumsetzer bzw. Audiodecoder eine vollständige oder weitgehend zeitkorrekte Datenübertragung der verschiedenen Daten möglich ist. Diese Ausbildung erweist sich insbesondere dann als besonders vorteilhaft, wenn neben den Buffern auch die Bitratenumsetzer bzw. der Audiodecoder durch die Steuereinheit so gesteuert werden, dass durch diese ein gegebenenfalls geringer Ausgleich bestehender Zeitunterschiede ermöglicht ist. Ein solcher Ausgleich kann beispielsweise bei Daten von einem DVD-Player mittels der den Daten zugeordneten sogenannten Timestamps erfolgen.

Nach einer bevorzugten Ausführung der Erfindung sind in den Pfaden für die Bearbeitung der Audiodaten, der Videodaten und der weiteren Daten Analyseeinheiten vorgesehen, mit deren Hilfe die jeweils aktuelle relative Verzögerung durch die unterschiedliche Be- oder Verarbeitung der Daten in den einzelen Pfaden beobachtet wird und dementsprechend in Zusammenwirkung mit der Steuereinheit die Verzögerungszeiten in den einzelnen Buffern bzw. in den Bitratenumsetzern oder dem Bitstreamdecoder nach den aktuell festgestellten Bedingungen gewählt wird. Damit kann auf die unterschiedlichsten Situationen spezifisch reagiert werden. Wird beispielsweise kein Ton oder nur ein Standbild oder einfach numerische Zeichen übertragen, so verändern sich die zu bearbeitenden und zu übertragenden Datenmengen, so dass es zu unterschiedlichen Bearbeitungszeiten für ein und dieselben Datentypen kommen kann. Diese Veränderungen werden durch die vorliegende Ausbildung der Erfindung berücksichtigt.

Als besonders vorteilhaft hat sich eine Ausbildung des Netzwerkes mit einer optischen Datenleitung herausgestellt. Bei dieser Ausbildung ist die maximal übertragbare Datenmenge des Netzwerkes nahezu unabhängig von der theoretisch maximalen Übertragungskapazität der Datenleitung, da diese durch ein lokales Netzwerk für einen automotiven Einsatz typisch nicht ausgeschöpft werden kann. Eine Berücksichtigung einer begrenzten Datenübertragungskapazität der Datenleitung ist somit nicht erforderlich.

Vorzugsweise ist der Bitratenumsetzer für die komprimierten Videodaten mit der Steuereinheit verbunden und so steuerbar, dass der Umfang der Datenreduktion bei der Bitratenumsetzung von der darstellbaren Datenmenge im Display der Datensenke abhängig wählbar ist. Mit dem Umfang der Datenreduktion variiert die hierfür benötigte Bearbeitungszeit in dem Bitratenumsetzer, so dass abhängig von der Auflösung und/oder von der Größe des Displays in der Datensenke und damit von der Darstellungsmöglichkeit des Displays die erforderliche Verzögerungszeit der einzelnen Datentypen erfindungsgemäß abhängig gewählt wird. Durch eine Übertragung der relevanten Informationen des Displays in der Datensenke an die Steuereinheit über die ringförmige Datenleitung wird die Steuereinheit in die Lage versetzt, den Bitratenumsetzer für die Videodaten und/oder die entsprechenden Elemente zur Verzögerung dahingehend zu steuern, dass eine Darstellung der verschiedenen Daten ohne wesentliche zeitliche Diskrepanz erfolgt.

Nach einer besonders bevorzugten Ausführungsform der Erfindung ist wenigstens eine Datensenke für die von der Datenquelle über die Datenleitung übertragenen Daten mit einem Buffer zur Zwischenspeicherung der empfangenen Daten versehen. Die Zwischenspeicherzeit dieses Buffers ist abhängig von einem über die Datenleitung von der Datenquelle übermittelten Steuersignal wählbar. Damit kann nicht nur in der Datenquelle, sondern auch in der Datensenke eine Korrektur im zeitlichen Verlauf der Daten vorgenommen werden. Dadurch ist es möglich, systematische Verzögerungen für Daten, die einer bestimmten Datensenke zugeordnet sind, durch eine in der Datensenke angeordneten Buffer zu korrigieren. Eine Korrektur in der Datenquelle oder in einer anderen Datensenke ist hiermit nicht erforderlich. Demzufolge könnten auch systematische Unterschiede in den Datenquellen durch einen derartigen Buffer in der jeweiligen Datensenke korrigiert werden.

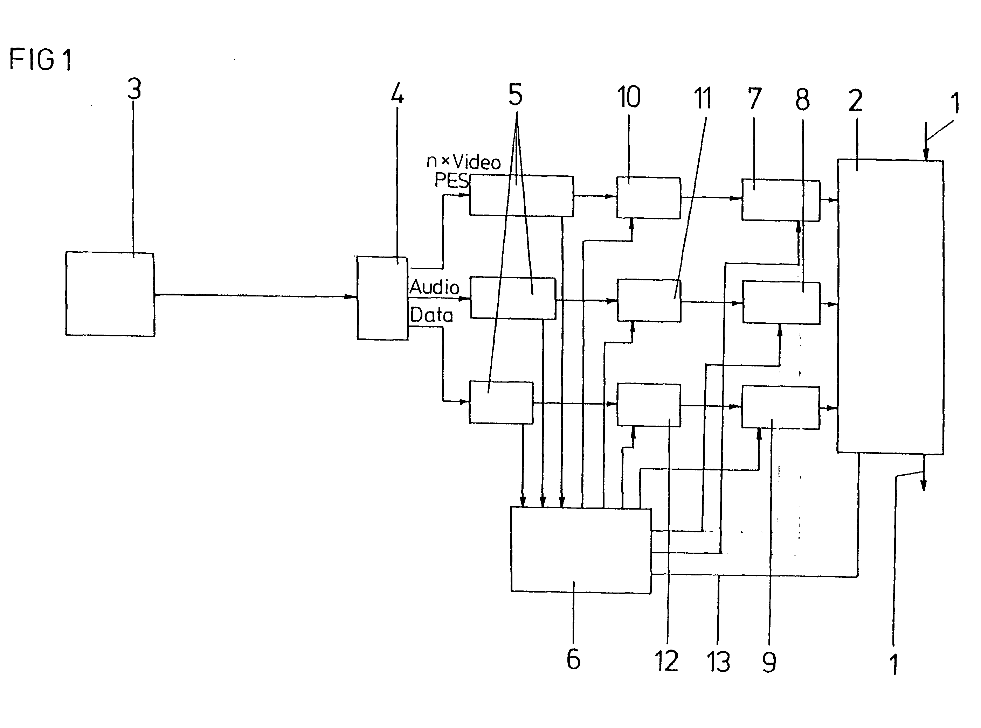

Ein bevorzugtes Ausführungsbeispiel einer Datenquelle der Erfindung ist in der Fig. 1 dargestellt und wird im Folgenden näher beschrieben.

Das lokale Netzwerk weist eine Vielzahl von Teilnehmern auf, die über eine optische Datenleitung 1 ringförmig verbunden sind. Jeder Teilnehmer zeigt ein Businterface 2 mit jeweils zwei Anschlüssen zur optischen Datenleitung 1. Der in Fig. 1 dargestellte Teilnehmer stellt eine Datenquelle dar, welche ein DVD-Laufwerk 3 zeigt und welche die auf einer DVD-Platte gespeicherten komprimierten Audio-, Video- und weitere Daten aufbereitet und diese über das Interface 2 an die Datenleitung 1 zur Übertragung an die der Datenquelle zugeordneten Datensenken einspeist. Die als ein komprimiertes Signal vorliegenden von dem DVD-Laufwerk 3 ausgelesenen komprimierten Audio-, Video- und weitere Daten werden in einem Demultiplexer 4 aus dem gemeinsamen komprimierten Signal herausgetrennt und jeweils einem spezifischen Bearbeitungspfad zugeführt.

Die durch den Demultiplexer 4 abgetrennten komprimierten Videodaten werden als mehrfacher Video-Packedsized-Elementary-Stream einer Analyseeinheit 5 für Videodaten zugeführt, welche den Umfang und die Art der zu bearbeitenden komprimierten Videodaten analysiert und ihr Analyseergebnis der Steuereinheit 6 zuführt. Die analysierten komprimierten Videodaten werden durch die Analyseeinheit 5 nicht verändert und werden anschließend einem Bitratenumsetzer 10 zugeführt, der die komprimierten Videodaten der DVD-Platte, welche dem MPEG-2 Videostandard gehorchen und eine variable Bitraten von bis zu 10 Megabit/s zeigen, umcodiert. Bei der Umcodierung findet eine Datenreduktion statt, die sich nach den Eigenschaften der Datensenke respektive nach der Größe und der Auflösung des Displays in der Datensenke richtet. Die Informationen zur Größe und Auflösung werden der Steuereinheit 6 über die Datenleitung 1, das Businterface 2 und die Steuerleitung 13 zugeführt und in entsprechende Steuerbefehle für die Steuerung des Bitratenumsetzers 10 umgewandelt. Da die MPEG-2 Videodaten auf eine Darstellung durch hochauflösende Großbildschirme ausgelegt sind und in einem Fahrzeug derartige hochauflösende Großbildschirme keinerlei Anwendung haben, kann durch die beschriebene Datenreduktion ein Großteil der komprimierten Daten bis zu einer Größenordnung von 3/4 verworfen werden und nur noch der Rest übertragen werden, wobei dies ohne merkliche Auswirkung auf die Darstellung der Videodaten in der Datensenke bleibt. Die umcodierten, datenreduzierten, komprimierten Videodaten werden anschließend als Packedsized-Elementary-Streams dem Videobuffer 7 zugeführt, der gesteuert durch die Steuereinheit 6 die Zwischenspeicherzeit und damit die Verzögerungszeit im Videobuffer verändern kann. Die verzögerten Videodaten werden anschließend einem Businterface 2 zugeführt, das die Videodaten in entsprechende Teilbildgruppen zur Übertragung an eine entsprechende Datensenke einschreibt.

Neben den komprimierten Videodaten werden die komprimierten Audiodaten einem entsprechenden Audiodatenpfad zugeführt, der von dem Videodatenpfad getrennt ausgebildet ist. Die komprimierten Audiodaten werden entsprechend den Videodaten einer Analyseeinheit 5 zugeführt, welche den Umfang und die Art der Audiodaten untersucht und das Ergebnis der Steuereinheit 6 zuführt. Danach werden die unveränderten, komprimierten Audiodaten, welche bei einer DVD-Platte zum Beispiel nach dem Dolby Digital Komprimierungsverfahren vorliegen, durch einen Bitstreamdecoder 11 decodiert. Dieser Decoder 11 ist als Dolby Digital Decoder 11 ausgebildet und setzt die komprimierten Audiosignale in nichtkomprimierte PCM-Signale um, die einen Surround-Sound (5 + 1 Kanäle) ermöglichen. Die nichtkomprimierten Audiodaten werden anschließend einem Audiobuffer 8 zugeführt, der mit der Steuereinheit 5 verbunden ist und durch diese so gesteuert werden kann, dass die Zwischenspeicherzeit und damit die Verzögerungszeit verändert werden kann.

Auf entsprechende Weise sind die durch den Demultiplexer 4 getrennten komprimierten, weiteren Daten einem Datenpfad zugeordnet, der auf entsprechende Weise eine Analyseeinheit 5, einen weiteren Bitratenumsetzer 12 und einen Data-Buffer 9 aufweist. Diese Komponenten des Datenpfades zeigen die entsprechenden Funktionalitäten wie die Komponenten der anderen Pfade.

Die Steuereinheit 6 erhält von den drei Analyseeinheiten 5 die Informationen zu den zu erwartenden relativen Zeitverzögerungen durch die unterschiedlichen Bearbeitungszeiten in den einzelnen Datenpfaden. Mit dieser Information wird die jeweilige Verzögerungszeit der einzelnen Buffer 7, 8, 9 gewählt. Daneben wird der Bitratenumsetzer 10 für die komprimierten Videodaten und der Dolby Digital Decoder 11 für die komprimierten Audiodaten sowie der weitere Bitratenumsetzer 12 für die komprimierten weiteren Daten durch die Steuereinheit 6 so angesteuert, dass ihre Bearbeitung etwas verzögert oder früher erfolgt. Hierbei wird auch mit Hilfe der in den komprimierten Daten enthaltenen Timestamps eine zeitliche Korrektur vorgenommen. Dabei können auch die Timestamps selbst aus dem Bitstrom ausgelesen, verändert und wieder in den Bitstrom zur späteren Korrektur eingesetzt werden.

Durch diese erfindungsgemäße Auftrennung der verschiedenen Daten und durch ihre spezifische Verarbeitung einschließlich der davon abhängigen spezifisch gewählten Verzögerungszeit gelingt es, die miteinander korrelierten Daten stärker in Einklang zu bringen und diese Daten dann über das Businterface 2 auf die Datenleitung 1 und an die betreffenden Datensenken, das sind andere Teilnehmer des Netwerkes, welche von der Datenquelle abgesetzt an einem anderen Ort im Fahrzeug untergebracht sind, zu übertragen. Duch die erfingungsgemäße Ausbildung mit dem Korrigieren der Zeitdifferenzen aufgrund von unterschiedlichen Bearbeitungsdauern der verschiedenen Datentypen gelingt es, die korrelierten Daten weitgehend oder vollständig synchron zur Darstellung zu bringen. Damit ist sichergestellt, dass der zu einem auf einem Display des Kraftfahrzeuges wiedergegebenen Bild durch ein Soundsystem wiedergegebene Ton passt. Damit ist die optische und akustische Wiedergabequalität des lokalen Netzwerkes mit seinen Teilnehmern auf hohem Niveau gegeben. Darüberhinaus gelingt es, die Auslastung der Übertragungskapazität des Netzwerkes sehr effizient zu nutzen, da abhängig vom Datentyp komprimierte, datenreduzierte Übertragungsformen bzw. nichtkomprimierte Datenformen zeitgleich übertragen werden.

### Bezugszeichenliste

- 1: Datenleitung
- 2: Businterface
- 3: DVD-Laufwerk
- 4: Demultiplexer
- 5: Analyseeinheit
- 6: Steuereinheit
- 7: Videobuffer
- 8: Audiobuffer
- 9: Datenbuffer
- 10: Bitratenumsetzer
- 11: Dolby-Digital-Decoder
- 12: zweiter Bitratenumsetzer
- 13: Steuerleitung

## Patentansprüche

1. Lokales Netzwerk in einem Fahrzeug mit mehreren über das Fahrzeug verteilten Teilnehmern, die Datenquellen und Datensenken bilden und die miteinander mittels einer Datenleitung (1) zur Übertragung von Audio- und Videodaten sowie von Steuerdaten zu einem ringförmigen Netzwerk verbunden sind, wobei die Audio-, Video- und Steuerdaten in einem Format übertragen werden, welches eine getaktete Folge von einzelnen Bitgruppen gleicher Länge vorschreit, in denen für die Audio- beziehungsweise Videodaten und die Steuerdaten jeweils bestimmte Bitpositionen vorgesehen sind und die Bitpositionen für die Audio- beziehungsweise Videodaten in mehrere zusammenhängende Teilbitgruppen zusammengefaßt sind und die diesen Teilbitgruppen zugewiesenen Daten mittels übertragener Steuerdaten einer bestimmten Datenquelle bzw. Datensenke zuordenbar sind, wobei wenigstens eine Datenquelle für Autoradio- und Videodaten und wenigstens eine Datensenke für die über die Datenleitung (1) übertragenen Audio- und Videodaten vorgesehen ist, **dadurch gekennzeichnet, daß** die Teilnehmer eine Datenquelle für komprimierte Audio- und Videodaten umfassen, wobei die Datenquelle aufweist:
- einen Demultiplexer (4) zur Trennung der in einem komprimierten Quellsignal enthaltenen komprimierten Audiodaten und komprimierten Videodaten,
- einen Bit-Stream-Decoder (11) zur Dekodierung der komprimierten Audiodaten und einen Audiobuffer (8) zur Zwischenspeicherung der getrennten oder dekodierten Audiodaten,
- einen Bitratenumsetzer (10) zur Umkodierung der komprimierten Videodaten in datenreduzierte Videodaten und einen Videobuffer (7) zur Zwischenspeicherung der getrennten oder datenreduzierten Videodaten,
- ein Businterface (2) zum Einbringen der zwischengespeicherten und decodierten Audiodaten und der zwischengespeicherten und datenreduzierten Videodaten der Datenquelle in die vorgesehenen Teilbitgruppen, und
- eine Steuereinheit (6), die mit dem Audiobuffer (8) und dem Videobuffer (7) verbunden ist, und die die wählbare Zwischenspeicherzeit des Audiobuffers (8) und des Videobuffers (7) festlegt.

2. Lokales Netzwerk nach Anspruch 1,
**dadurch gekennzeichnet,**
- **daß** die Datenquelle für komprimierte Audio- und Videodaten eine Datenquelle für weitere komprimierte Daten darstellt und diese weiteren komprimierten Daten dem Demultiplexer (4) zur Trennung von den Audio- und Videodaten zuführbar sind und daß ein zweiter Bitratenumsetzer (12) zur Umcodierung der weiteren, komprimierten Daten und ein Datenbuffer (9) zur Zwischenspeicherung der getrennten Daten vorgesehen ist,
- **daß** das Businterface (2) geeignet ist, die verzögerten, decodierten Audiodaten, die verzögerten, umcodierten Videodaten und die verzögerten, umcodierten Daten der Datenquelle in vorgesehene Teilbitgruppen einzubringen und
- **daß** die Steuereinheit (6) zusätzlich mit dem Databuffer (9) verbunden ist, und die die wählbare Zwischenspeicherzeit des Datenbuffers (7, 8, (9) steuernd festlegt.

3. Lokales Netzwerk nach Anspruch 1 oder 2,
**dadurch gekennzeichnet, daß** wenigstens einer der Buffer (7, 8, 9) vor dem Interface (2) angeordnet ist.

4. Lokales Netzwerk nach einem der vorstehenden Ansprüche, **dadurch gekennzeichnet, daß** wenigstens einer der Buffer (7, 8, 9) unmittelbar hinter dem Demultiplexer (4) vor dem ihm zugeordneten Bit-Stream-Decoder (11) bzw. Bitratenumsetzer (10, 12) angeordnet ist.

5. Lokales Netzwerk nach einem der vorstehenden Ansprüche, **dadurch gekennzeichnet, daß** dem Bit-Stream-Decoder (11) und den Bitratenumsetzern (10, 12) Analyeeeinheiten (5) zugeordnet sind, die eine Bestimmung der zeitlichen Relation der Daten zueinander ermöglichen und die mit der Steuereinheit (6) zur Festlegung der Zwischenspeicherzeiten verbunden sind.

6. Lokales Netzwerk nach einem der vorstehenden Ansprüche, **dadurch gekennzeichnet, daß** die Steuereinheit (6) mit dem Bit-Stream-Decoder (11) und mit dem/den Bitratenumsetzern (10, 12) verbunden sind, und diese über diese Verbindungsleitungen so steuerbar sind, daß zeitliche Unterschiede aufgrund der unterschiedlichen Bearbeitungszeit in der Datenquelle in den dargestellten Signalen reduzierbar sind.

7. Lokales Netzwerk nach einem der vorstehenden Ansprüche, **dadurch gekennzeichnet, daß** die Teilnehmer des Netzwerkes über eine optische Datenleitung (1)verbunden sind.

8. Lokales Netzwerk nach einem der Ansprüche 6 oder 7, **dadurch gekennzeichnet, daß** der Bitratenumsetzer (10) für die komprimierten Videodaten über die Verbindungeleitung so steuerbar ist, daß der Umfang der Datenreduktion bei der Bitratenumsetzung und damit die dafür benötigte Bearbeitungazeit abhängig von der Auflösung und/oder von der Größe des Displays in der zugeordneten Datensenke für die Videodaten wählbar ist.

9. Lokales Netzwerk nach einem der vorstehenden Ansprüche, **dadurch gekennzeichnet, daß** der Bit-Stream-Decoder (11) das komprimierte Audiosignal in ein PCM-Audio-Signal wandelt.

10. Lokales Netzwerk nach einem der vorstehenden Ansprüche, **dadurch gekennzeichnet, daß** die Datenquelle einen DVD-Abspieler (3) enthält.

11. Lokales Netzwerk nach einem der vorstehenden Ansprüche, **dadurch gekennzeichnet, daß** wenigstens eine Datensenke für die von der Datenquelle über die Datenleitung (1) übertragenen Daten einen Buffer zur Zwischenspeicherung der empfangenen Daten enthält, dessen Zwischenspeicherzeit abhängig von einem über die Datenleitung (1) von der Datenquelle übermittelten Steuersignal wählbar ist.

## Claims

1. A local network in a vehicle having several members distributed over the vehicle, which form data sources and data sinks and which are connected to one another by means of a data line (1) for the transfer of audio and video data and also control data to a ring network, wherein the items of audio, video and control data are transferred in a format which prescribes a clocked sequence of individual bit groups of equal length, in which bit positions determined in each case for the audio and video data respectively are provided and the control data and the bit positions for the audio and respectively the video data are combined in several connected sub-bit groups and the data allocated to these sub-bit groups can be assigned by means of transmitted control data to a specific data source or data sink, with at least one data source being provided for car radio and video data and at least one data sink being provided for the audio and video data transferred via the data line (1),
**characterised in that** the members comprises a data source for compressed audio and video data, wherein the data source comprises:
- a demultiplexer (4) for separating the compressed audio data and compressed video data contained in a compressed source signal,
- a bit-stream decoder (11) for decoding the compressed audio data and an audio buffer (8) for the intermediate storage of the separated or decoded audio data,
- a bit-rate converter (10) for recoding the compressed video data into data-reduced video data and a video buffer (7) for the intermediate storage of the separated or data-reduced video data,
- a bus interface (2) for the introduction of the buffered and decoded audio data and the buffered and data-reduced video data of the data source into the provided sub-bit groups, and
- a control unit (6), which is connected to the audio buffer (8) and the video buffer (7), and which determines the selectable intermediate storage time of the audio buffer (8) and of the video buffer (7).

2. A local network according to Claim 1,
**characterised in that**
- the data source for compressed audio and video data represents a data source for other compressed data and this other compressed data can be supplied to the demultiplexer (4) for the separation of the items of audio and video data and **in that** a second bit-rate converter (12) is provided for the recoding of the other, compressed data and a data buffer (9) is provided for the intermediate storage of the separated data.
- **in that** the bus interface (2) is suitable for bringing the delayed, decoded audio data, the delayed, recoded video data and the delayed, recoded data of the data source into provided sub-bit groups and
- **in that** the control unit (6) is additionally connected to the data buffer (9), and which [sic] determines the selectable intermediate storage time of the data buffer (7, 8, (9).

3. A local network according to Claim 1 or 2,
**characterised in that** at least one of the buffers (7, 8, 9) is disposed in front of the interface (2).

4. A local network according to one of the preceding Claims,
**characterised in that** at least one of the buffers (7, 8, 9) is disposed directly behind the demultiplexer (4) in front of the bit-stream decoder (10) or bit-rate converter (10, 12) associated with it.

5. A local network according to one of the preceding Claims,
**characterised in that** analysis units (5) are associated with the bit-stream decoder (11) and the bit-rate converters (10, 12), which enable a determination of the time relationship of the items of data to one another and which are connected to the control unit (6) to determine the intermediate storage times.

6. A local network according to one of the preceding Claims,
**characterised in that** the control unit (6) are [sic] connected to the bit-stream decoder (11) and to the bit-rate converters (10, 12), and these can be controlled via these connecting lines so that time differences as a result of the different processing time in the data source can be reduced in the represented signals.

7. A local network according to one of the preceding Claims,
**characterised in that** the members of the network are connected via an optical data line (1).

8. A local network according to one of Claims 6 or 7,
**characterised in that** the bit-rate converter (10) for the compressed video data can be controlled via the connecting line so that the extent of the data reduction during the bit-rate conversion and thus the processing time required for it can be selected as a function of the definition and/or as a function of the size of the display in the associated data sink for the video data.

9. A local network according to one of the preceding Claim,
**characterised in that** the bit-stream decoder (11) converts the compressed audio signal into a PCM audio signal.

10. A local network according to one of the preceding Claims,
**characterised in that** the data source contains a DVD player (3).

11. A local network according to one of the preceding Claims,
**characterised in that** at least one data sink for the data transferred from the data source via the data line (1) contains a buffer for the intermediate storage of the received data, the intermediate storage time of which can be selected as a function of a control signal transmitted from the data source via the data line (1).

## Revendications

1. Réseau local équipant un véhicule comportant plusieurs postes distribués dans le véhicule constituant des sources et des puits de données, reliés par une ligne de transmission de données (1) pour transmettre des données audio et vidéo ainsi que des données de commande en constituant un réseau en anneau, les données audio, vidéo et celles de commande étant transmises dans un format qui prescrit la succession cadencée de groupes de bits séparés, de même longueur, dans lesquels on prévoit chaque fois certaines positions de bits pour les données audio ou vidéo et les données de commande, les positions de bits des données audio ou des données vidéo ont regroupées en plusieurs groupes de bits partiels réunis et les données associées à ces groupes de bits, partiels sont attribuées à une certaine source ou à un certain puit de données par les données de commandes transmises, avec au moins une source de données prévue pour l'autoradio et la vidéo et au moins un puit de données prévu pour les données audio et vidéo transmises par la ligne de données (1),
**caractérisé en ce que**
les postes comprennent une source de données pour les données audio et vidéo comprimées, cette source de données comprenant :
- un démultiplexeur (4) pour séparer les données audio comprimées et les données vidéo comprimées, contenues dans le signal source, comprimé,
- un décodeur de flux de bits (11) pour décoder les données audio comprimées et une mémoire tampon audio (8) pour stocker de manière intermédiaire les données audio séparées ou décodées,
- un convertisseur de vitesse de bits (10) pour transcoder les données vidéo comprimées en données vidéo à volume de données réduites et une mémoire tampon vidéo (7) pour recevoir provisoirement les données vidéo séparées ou réduites,
- une interface de bus (2) pour introduire les données audio décomprimées et les données audio enregistrées de façon intermédiaire et des données vidéo réduites de la source de données dans des groupes de bits partiels prévus et
- une unité de commande (6) reliée à la mémoire tampon audio (8) et la mémoire tampon vidéo (7) et qui fixe le temps de stockage intermédiaire choisi de la mémoire tampon audio (8) et de la mémoire tampon vidéo (7).

2. Réseau local selon la revendication 1,
**caractérisé en ce que**
- la source de données audio et vidéo comprimées est une source de données pour d'autres données comprimées et ces autres données comprimées peuvent être fournies au démultiplexeur (4) pour séparer les données audio et les données vidéo, un second convertisseur de vitesse de bits (12) transcode les autres données comprimées et une mémoire tampon (9) assure le stockage intermédiaire des données séparées,
- l'interface de bus (2) permet d'introduire les données audio décodées, retardées, les données vidéo transcodées, retardées et les données non codées, retardées, des sources de données, dans des groupes de bits prévus, et
- l'unité de commande (6) est en outre reliée à la mémoire tampon de données (9) et le temps de stockage intermédiaire sélectionné de la mémoire tampon de données (7, 8, 9) est fixé par commande.

3. Réseau local selon la revendication 1 ou 2,
**caractérisé en ce qu'**
au moins l'une des mémoires tampon (7, 8, 9) se trouve en amont de l'interface (2).

4. Réseau local selon l'une des revendications précédentes,
**caractérisé en ce qu'**
au moins l'une des mémoires tampon (7, 8, 9) se trouve directement derrière le démultiplexeur (4) avant le décodeur de flux de bits (21) qui lui est associé ou le convertisseur de vitesse de bits (10, 12).

5. Réseau local selon l'une des revendications précédentes,
**caractérisé en ce que**
les unités d'analyse (15) sont associées au décodeur de flux de bits (11) et au convertisseur de vitesse de bits (10, 12), ces unités d'analyse permettant une certaine détermination des relations chronologiques des données entre elles et ces unités sont reliées à l'unité de commande (6) pour fixer les temps de mise en mémoire de façon intermédiaire.

6. Réseau local selon l'une des revendications précédentes,
**caractérisé en ce que**
l'unité de commande (6) est reliée au décodeur de flux de bits (11) et à des convertisseurs de vitesse de bits (10, 12) et ceux-ci sont commandés par l'intermédiaire des lignes de liaison de façon à réduire les différences de temps liées à des durées de traitement différentes dans la source de données contenues dans les signaux représentés.

7. Réseau local selon l'une des revendications précédentes,
**caractérisé en ce que**
les postes du réseau sont reliés par une ligne de données optiques (1).

8. Réseau local selon la revendication 6 ou 7,
**caractérisé en ce que**
le convertisseur de vitesse de bits (10) pour les données vidéo comprimées est commandé par l'intermédiaire de cette ligne de liaison pour que l'importance de la réduction des données lors de la conversion de vitesse de bits et ainsi le temps de traitement nécessaire à cet effet puisse être choisie en fonction de la résolution et/ou de la taille de l'afficheur dans le puit de données correspondant pour les données vidéo.

9. Réseau local selon l'une des revendications précédentes,
**caractérisé en ce que**
le décodeur de flux de bits (11) transforme le signal audio comprimé en un signal audio PCM.

10. Réseau local selon l'une des revendications précédentes,
**caractérisé en ce que**
la source de données comporte un lecteur de disque DVD (3).

11. Réseau local selon l'une des revendications précédentes,
**caractérisé en ce qu'**
au moins un puit de données pour les données transmises par la source de données vers la ligne de données (1), comporte une mémoire tampon pour le stockage intermédiaire des données reçues, le temps de stockage intermédiaire dépendant d'un signal de commande transmis par la ligne de données (1) à partir de la source de données.
